# EUROPEAN PATENT SPECIFICATION

(11) **EP 2 488 728 B1**
(45) Date of publication and mention of the grant of the patent: **15.05.2013**
(21) Application number: 10782220.7
(22) Date of filing: 08.11.2010
(51) Int. Cl.: F01D 11/10, F01D 25/12, F02C 3/14, F02C 7/12

(54) **TURBINE FOR CONVERTING ENERGY AND METHOD FOR OPERATING THE SAME**
Turbine zur Umwandlung von Energie und Verfahren zu ihrem Betrieb
Turbine de conversion d'énergie et son procédé de fonctionnement

(30) Priority: 11.02.2010 EP 10001423; 30.12.2009 EP 09016124
(43) Date of publication of application: 22.08.2012
(73) Proprietor: Siemens Aktiengesellschaft, 80333 München (DE)
(72) Inventor: SHEPHERD, Andrew, Lincolnshire LN4 1PA (GB)
(86) International application number: PCT/EP2010/066974
(87) International publication number: WO 2011/079997

(56) References cited:
- EP-A1- 2 009 248
- WO-A2-2009/083456
- US-A- 4 311 431
- US-A1- 2009 266 080

## Description

### Field of invention

The present invention relates to a turbine for converting energy from a streaming fluid and to a method for converting energy from a streaming fluid.

From the state of the art a turbine is known which can convert energy from a streaming fluid. In particular, a part of potential energy (pressure head) and/or kinetic energy (velocity head) may be extracted from a streaming fluid using a turbine and may be converted to mechanical energy, such as rotational energy. In particular, this rotational energy may be used to drive a generator to generate electric energy or to drive a mechanical pump or compressor

There are a number of different types of turbines known in the art. A steam turbine extracts energy from a streaming steam and is often used for the generation of electricity in thermal power plants. The steam may thereby be generated using fuel gas, coal, fuel oil or nuclear power. Gas turbines are supplied with a streaming fluid from a combustion chamber, where fuel is burned, wherein the flue gas is used to drive the turbine, and in particular to drive additionally a compressor upstream of the combustion chamber to generate compressed air for the combustion chamber.

In general a turbine comprises a rotor shaft which is rotatably supported by a bearing within a casing. Plural rotor blades are connected to the rotor shaft extending radially outwardly from the rotor shaft. The rotor blades have a particularly shaped surface profile such as to convert energy of a streaming fluid into a mechanical movement of the rotor blade. In a typical turbine plural rotor blades are arranged in a so-called rotor blade row substantially perpendicular to a rotation axis of the rotor shaft. Typically, a turbine may comprise several rotor blade rows arranged spaced apart in an axial direction from each other. In between each pair of rotor blade rows a row of guide vanes is arranged that are connected to a stator part of the turbine which also comprises the bearing for the rotor shaft. Thus, the rotor blade rows may rotate relative to the static guide vane rows.

A streaming fluid containing potential energy (pressure head) and kinetic energy (velocity head) is supplied in an axial direction, i.e. along the rotation axis of the rotor shaft. The streaming fluid impinges onto a most upstream row of guide vanes which deflects the streaming fluid such that the streaming fluid is directed to the row of rotor blades arranged downstream of the first guide vane row. The streaming fluid impinges onto the rotor blades and transfers a part of its energy to the rotor blades such that the rotor blades move into a certain direction. For this purpose, the rotor blades are shaped in a particular shape to optimally convert the energy of the impacting streaming fluid into mechanical movement. Since the rotor blades are connected to the rotor shaft the movement of the rotor blades causes the rotor shaft to rotate.

Having deposited a part of its energy to a row of rotor blades the streaming fluid reaches a downstream row of guide vanes having an airfoil shape which guide vanes in turn direct the streaming fluid to a rotor blade row even further downstream. This further rotor blade row also extracts some energy from the streaming fluid and converts it to mechanical energy. Eventually, the streaming fluid has lost most of its energy and exits from the last rotor blade row to an exhaust duct which may lead the streaming fluid to the environment.

Whatever type of turbine is concerned the streaming fluid used to drive the turbine often has a high temperature, a high pressure and a high velocity. Therefore, the rotor blades as well as the guide vanes must be constructed and designed to withstand the impact of the hot, high pressure, high velocity fluid. In particular, upon impinging onto the rotor blades the streaming fluid not only transfers energy in form of mechanical energy but also in form of heat energy. Thereby, the different components of the turbine, in particular the rotor blades, the guide vanes and the casing are heated up. The heating of the rotor blades causes them to expand which may lead to problems such as interference with neighbouring components. One further aspect is that due to the increased material temperature oxidation and/or corrosion of the component may take place.

The rotor blades rotate within a working volume which is delimited by a casing or other components of a stator part of the turbine. To ensure that the streaming fluid impinges onto the rotor blades in order to convert a substantial portion of its energy into mechanical energy the streaming fluid has to be prohibited to escape radially outwards from the rotor blades. Therefore, a gap between the blade tips being the radially outermost portions of the rotor blades and the casing must be as small as possible. During operation the hot streaming fluid may pass over the blade tip through the gap between the blade tip and tip seal portion of the casing thereby heating up the blade tip and the tip seal portion of the casing to high temperatures. The high temperature limits the life of the tip seal portion of the casing and also of the blade tip. Conventionally, the tip seal portion of a casing is cooled using compressor delivery air from a compressor located upstream of the rotor blades. However, this cooling causes a performance penalty, because the cooling air used for cooling the tip seal portion of the casing and the blade tip does not take part in the heat raise during combustion and will therefore exert much less mechanical work at the rotor blades.

In order to control the expansion of the rotor blades it has been proposed to cool the rotor blades by atmospheric air. Document US 3,645,096 discloses peripheral section openings in gas turbine engines, wherein a peripheral opening extends through the casing of the gas turbine to cool the rotor blade tips with fresh atmospheric air.

From the document EP 1 024 251 B1 a preferential cooling a shroud as well as the blade tips is known.

From the document US 4,733,538 a gas turbine engine is known, wherein apertures are arranged in a circumferential direction in a casing.

From the document WO 2009/083456 A2 a gas turbine engine is known, wherein cooling ports are present for directing cooling fluid to an upstream region of a guide vane with the aim to improve flow conditions in the hot gas.

In this document WO 2009/083456 A2 further related prior art is mentioned, e.g. EP 0 321 809 A1, EP 0 704 657 A1, US 6,751,962 B1 which mainly focus on improvements for Advanced Environmental Vortex (AEV) type burners. In the also referenced EP 1 505 254 A2 a figure shows several options of injecting cooling fluid - air or steam - via vanes and blades into the hot gas path.

However, it has been observed that an operation of a turbine is often not satisfactory, in particular regarding its efficiency.

Thus, there may be a need to provide a turbine for converting energy from a fluid which may exhibit an improved efficiency and which may have at the same time a simple construction and/or a high durability. Further, there may be a need to provide an improved method for operating a turbine, in particular regarding its efficiency.

### Summary of the Invention

This need may be met by the subject matter according to the independent claims. Advantageous embodiments are described by the dependent claims.

According to an exemplary aspect, a turbine for converting energy is provided, wherein the turbine comprises a casing; a rotor shaft rotatably, around a rotation axis extending in an axial direction, supported within the casing; at least one fluid entry duct fixed at the casing for supplying streaming fluid; at least one guide vane having a downstream edge, the guide vane being fixed at the casing; at least one cooling duct in the casing, the cooling duct having an exit. Thereby, with respect to the rotation axis, an angular position of a center of the exit of the cooling duct is spaced apart from an angular position of a portion of the downstream edge of the guide vane, offset by a first offset angle, by a first angular distance, and the angular position of the center of the exit of the cooling duct, offset by a second offset angle, is spaced apart from an angular position of a center of the fluid entry duct by a second angular distance, wherein the first angular distance is less than 10°, in particular less than 7°, more in particular less than 5°, and the second angular distance is less than 30°, in particular less than 20°, more in particular less than 15°. Herein, the center of the exit of the at least one cooling duct is arranged downstream of the at least one guide vane, wherein a plurality of cooling ducts comprising the at least one cooling duct is arranged such that where streaming fluid temperature and pressure both are high a maximum cooling is provided.

The turbine may be a turbine of any type, such as a steam turbine, a gas turbine or the like. Thus, the gas turbine may or may not comprise means for compressing air, the turbine may or may not comprise means for mixing flue gas with fuel and burning the mixture of the flue gas and the fuel. Thus, in case of a gas turbine the fluid streaming downstream may represent the burned mixture of the compressed air and the fuel, i.e. the exhaust gas. In case of a steam turbine the streaming fluid may represent water steam supplied by an external facility providing high energy water steam.

In particular, the fluid may be a gas containing energy in form of potential energy (pressure head) and/or kinetic energy (velocity head) and/or heat energy.

The turbine comprises a casing and other stator parts within which a rotor shaft is rotatably supported. To reduce friction during operation of the turbine the rotor shaft may be supported by a bearing. The rotor shaft may be adapted to rotate relative to the casing and the other stator parts around a rotation axis extending in an axial direction. The axial direction may define a z-axis of a coordinate system in three dimensions, wherein points may be represented by cylinder coordinates (ρ,ϕ,z). The meaning of these coordinates is as follows: First, an x-y plane is chosen to be orthogonal to the z-axis. For a given point with cylinder coordinates (p,ϕ,z) p represents the radial distance from the z-axis to the point, the angle ϕ is the azimuth angle between a reference direction, such as the x-direction, on the x-y plane and the line from the origin of the coordinate system to the projection of the point on the x-y plane, while z represents the distance from the x-y plane to the point.

In the context of the present application a radial direction refers to a direction directing away from the rotation axis and including an angle of 90° with the rotation axis and thus with the axial direction.

The fluid entry duct is provided for supplying streaming fluid to the turbine, in particular for supplying the streaming fluid to the at least one guide vane. In particular, the turbine may comprise plural fluid entry ducts that together form a complete annulus. The at least one guide vane is fixed at the casing and may radially project inwards towards the rotor shaft, the rotor shaft being rotatable relative to the guide vane. The at least one guide vane may have an aerofoil shape having a concave upstream surface and having a convex downstream surface.

Herein, the streaming fluid may have a streaming direction which may allow to define an upstream side of a component as well as a downstream side of the component. The upstream side of the component may be the side of the component the streaming fluid is directed at, i.e. the side which faces the approaching fluid. The downstream side of the component may be the side of the component the streaming fluid is directed from, i.e. which faces the outgoing fluid.

The downstream edge of the guide vane may be an edge where the concave surface and the convex surface are joined and where the concave surface and the convex surface of the guide vane include an arcuate angle, such as an angle below 20°. At a particular angular position shifted from the angular position of the downstream edge and downstream the guide vane the static pressure of the streaming fluid during operation may be significantly higher than in other regions farther away from the particular position. The region having an enhanced pressure is also referred to as "high pressure region".

A so called "wake region" may be a lower pressure region near each nozzle guide vane trailing (downstream) edge. The high pressure region may be located in between the wake region(s). In particular the high pressure region may have an angular position between, such as half-way between, angular positions of downstream edges of adjacent guide vanes having at least approximately same axial positions, thus being comprised in a same row of guide vanes. Further, the angular position of the high pressure region may depend on a number of other parameters, such as geometry of the guide vane, orientation of the guide vane, number of guide vanes in a complete row of guide vanes.

An angular position of a center of the exit of the cooling duct, may depend on an axial distance between the downstream edge of the guide vane and a radially outer gap (also referred to as "critical gap" in the following) between a guide vane shroud and an radially outer end of the rotor blade downstream of the guide vane but upstream of a rotor blade tip seal. This gap may lead to a cavity in communication with the rotor blade tip seal. At angular positions with increased pressure hot fluid may enter through this critical gap from the working volume during operation into the cavity and may heat up the tip seal portion leading to a risk of damaging the tip seal portion of the stator part of the turbine and/or the rotor blade tip. Embodiments may provide a cooling capability particularly to avoid or diminish damaging these turbine parts.

A cooling duct may be provided in the casing for providing cooling air to a working volume where the streaming fluid streams and where rotor blades may be impinged by the streaming fluid to transfer energy to the rotor blades. The cooling duct may be adapted such that cooling gas flowing through the cooling duct reaches a region radially outwards of the working volume in which the streaming fluid streams. The region radially outwards of the working volume may comprise a region where the streaming fluid leaks towards the critical gap between a rotor blade tip and a sealing portion of the casing. In particular the cooling gas may cool a tip of a rotor blade, in particular a tip seal portion of the casing and the like.

For appropriately supplying the cooling gas to the component of the turbine to be cooled the exit of the cooling duct may be arranged at a particular position. The position of the exit may be defined by defining its angular position relative to other components of the turbine. The angular position may be represented by the cylinder coordinate ϕ, wherein the rotation axis defines the z-axis in the coordinate system, as explained above. Irrespective of its coordinate values of z and p the location of the exit, in particular the location of a center of the exit, can be specified by specifying its angular position, for example represented by the cylinder coordinate ϕ. The center of the exit may be a center of an exit area of the cooling duct at the exit or a center of mass of an evenly loaded surface just covering or blocking the exit. For example, if the exit would have a shape of a circle, the center of the exit would be the middle point of the circle. Further, if the exit would have a rectangular shape the center of the exit would be the intersection point of the diagonals of the rectangle.

The ϕ coordinate of the center of the exit of the cooling duct is defined relative to the ϕ coordinates of the portion of the downstream edge of the guide vane, offset by a first offset angle, and the center of the fluid entry duct, offset by a second offset angle. Again, the center of the fluid entry duct may be a center of mass of an evenly loaded surface just blocking or covering the fluid entry duct. For example, if the fluid entry duct would have an exit having a circular shape, the center of the fluid entry duct would be the middle point of the circle. The ϕ coordinate of the center of the exit of the cooling duct deviates less than 10°, in particular less than 5° from a ϕ coordinate of the portion of the downstream edge of the guide vane which is offset by a first offset angle. Thereby a preferred position of the exit of the cooling duct may depend on a relative axial position of the downstream edge of the guide vane, since the high pressure region downstream the guide vane may change its circumferential (i.e. angular) position as the streaming fluid streams downstream.

Thereby, the portion of the downstream edge of the guide vane may be a point of the downstream edge of the guide vane being located farthest downstream. In other embodiments the portion of the downstream edge of the guide vane may be a point at the downstream edge radially farthest outwards, thus closest to the surrounding casing.

Further, the ϕ coordinate of the center of the exit of the cooling duct deviates less than 30°, in particular less than 15° from the ϕ coordinate of the center of the fluid entry duct which is offset by a second offset angle. According to another embodiment the deviation of the ϕ coordinate of the center of the exit of the cooling duct deviates even less from the ϕ coordinates of the portion of the downstream edge of the guide vane and the center of the fluid entry duct, which are offset by the first and the second offset angle, respectfully. In particular, the center of the exit of the cooling duct may be at least approximately aligned with the portion of the downstream edge of the guide vane offset by the first offset angle as well as with the center of the fluid entry duct offset by the second offset angle regarding its angular position with respect to the rotation axis, i.e. the axial direction.

In particular, an angular distance between two points may be represented by a difference of their values of the cylinder coordinate ϕ.

The cooling duct may be arranged such that an effective cooling of components of the turbine subjected to a high temperature and to a high pressure during operation may be achieved.

"A cavity" is referred to a spatial region (radially outer-wards from the radial outer end of the guide vane aerofoil surfaces) upstream of the tip seal of a rotor blade, where the cooling duct exit is located and where the streaming fluid, i.e. the main flowpath gas leaks into through the critical gap. According to an embodiment the position of the entry and the exit of the cooling duct may be set as follows.
1) Fix the orientation angles of the cooling duct, so that the mixing losses as it enters the swirling air in the cavity are minimised,
2) Fix the exit circumferential (angular) location of the cooling hole so that the cooling air is directed at the point where the high pressure and high temperature streaming fluid enters the cavity,
3) Use the orientation angles of the cooling duct and the position of the exit of the cooling duct to calculate the necessary position of the entry to the cooling duct.

Other embodiments may perform other steps to define the location of the cooling duct.

According to an embodiment of the turbine, the first angular distance is less than 20%, in particular less than 10%, of an angular extent of the guide vane. The angular extent of the guide vane may be represented by a difference of a ϕ angle defining an upstream edge of the guide vane and a ϕ angle defining the downstream edge of the guide vane. For example, if the angular extent of the guide vane would be 30° the first angular distance would be less than 6°, in particular less than 3°.

According to a further embodiment of the turbine, the second angular distance is less than three times, in particular less than two times, an angular extent of the fluid entry duct. The angular extent of the fluid entry duct may be a difference in ϕ angles of points at the fluid entry duct defining a maximum size or diameter of the fluid entry duct.

According to a further embodiment of the turbine, the first offset angle depends on a distance between an axial position of the downstream edge of the at least one guide vane and an axial position of the center of the exit of the cooling duct, and the second offset angle depends on a distance between an axial position of the center of the fluid entry duct and an axial position of the center of the exit of the cooling duct. Thereby the first offset angle may increase with increasing distance between the axial position of the downstream edge of the at least one guide vane and the axial position of the center of the exit of the cooling duct, and the second offset angle may increase with increasing distance between an axial position of the center of the fluid entry duct and an axial position of the center of the exit of the cooling duct. Thereby, the first offset angle and the second offset angle may depend on a amount of rotation of the streaming fluid when it streams from the fluid entry duct to the exit of the cooling duct and may depend on an amount of rotation of the streaming fluid when it streams from the guide vane to the exit of the cooling duct.

Further, the first offset angle may depend on a distance between an axial position of the downstream edge of the at least one guide vane and an axial position of the critical gap through which hot fluid may enter the cavity as explained above.

According to a further embodiment of the turbine the first offset angle depends on a geometry and/or an orientation of the guide vane. The geometry and/or orientation of the guide vane may influence a flow direction of the streaming fluid and may thereby influence at which angular position the streaming fluid reaches the critical gap.

According to a further embodiment the turbine comprises a further guide vane having a further downstream edge, wherein an axial position of the downstream edge of the at least one guide vane equals an axial position of the downstream edge of the further guide vane, and wherein the first offset angle depends on a distance between an angular position of the downstream edge of the at least one guide vane and an angular position of the downstream edge of the further guide vane. Immediately downstream the two guide vanes a region of increased pressure may occur in between the two downstream edges during operation. The angular position of this high pressure region may change depending on an axial position downstream the guide vanes due to a spiralling motion of the streaming fluid.

According to a further embodiment of the turbine, the cooling duct in the casing has an entry, wherein a line defined by a center of the entry and the center of the exit of the cooling duct and projected into a plane orthogonal to a radial direction of extent of the guide vane includes an angle with a line defined by a projection of a point at the downstream edge into the plane and a projection of a point at an upstream edge of the guide vane into the plane, wherein the angle is less than 30°, in particular less than 15°. In particular, the cooling duct may be straight running from the entry to the exit. In particular, the cooling duct may be formed by drilling a straight hole into the casing. In particular, when projected along the radial direction the guide vane and the cooling duct deviate in its orientation less than 30°, in particular less than 15°. Thereby, during operation, the streaming fluid may at least approximately stream in a same direction as cooling gas flowing through the cooling duct, whereby a cooling effect may be improved, because otherwise the difference in velocity between the cooling gas and the streaming fluid may cause turbulences

According to a further embodiment of the turbine, along the axial direction, the exit of the cooling duct is arranged downstream relative to the entry of the cooling duct. Thus, cooling gas exiting from the exit of the cooling duct into the working volume may have a velocity component parallel to an overall velocity of the streaming fluid. Further, cooling gas exiting from the exit of the cooling duct may advantageously be directed to components of the turbine arranged further downstream relative to the exit of the cooling duct. These components to be cooled may comprise a rotor blade, a rotor blade tip and/or a tip seal portion of the casing axially located at an axial position of the rotor blade tip.

According to a further embodiment of the turbine, portions of the casing define a cooling volume for accommodating cooling fluid, the cooling fluid being in communication, via the cooling duct, with a working volume for accommodating the streaming fluid. Further components of the turbine may contribute to define the cooling volume. Alternatively, the cooling volume may be defined by a container separate from the casing. The cooling volume may be enriched with cooling fluid from an external source or may be provided by a bleed from a compressor upstream the at least one guide vane. The cooling fluid may be a gas having a temperature between 200°C and 600°C. The streaming fluid in the working volume may have a temperature in the range from 800°C to 1400°C. The guide vane may be located within the working volume.

According to a further embodiment of the turbine, the turbine further comprises at least one rotor blade having a blade tip at a radially outer end of the rotor blade, the rotor blade being fixed at the rotor shaft. The rotor blade may have an upstream surface and a downstream surface suitably shaped to convert energy of the impinging streaming fluid into mechanical energy. Thereby, the rotor blade may be caused to move in a circumferential direction. Since the rotor blade is fixed at the rotor shaft, the rotor shaft rotates relative to the casing and also relative to the guide vane. The at least one rotor blade may be arranged, in the axial direction, downstream from the at least one guide vane.

According to a further embodiment of the turbine, along the axial direction, the downstream edge of the guide vane is located at a first axial position and the rotor blade tip is located at a second axial position, wherein an axial position of the center of the exit of the cooling duct lies between the first axial position and the second axial position. Thus, cooling fluid exiting at the exit of the cooling duct may advantageously cool the rotor blade tip of the rotor blade. Further, a tip seal portion of the casing arranged at least approximately at a same axial position as the rotor blade tip may advantageously be cooled by the cooling fluid exiting at the exit of the cooling duct as well.

According to a further embodiment of the turbine, the portions of the casing defining the cooling volume are consolidated for cooling fluid at positions which satisfy the following conditions: The positions have an axial position between the first axial position and the second axial position and the positions have an angular position farther away than 20°, in particular 15°, from the angular position of the portion of the downstream edge of the guide vane, offset by the first offset angle, or farther away than 35°, in particular 40°, from the angular position of the center of the fluid entry duct, offset by the second offset angle. The offset angles may be larger than zero due to rotation of the streaming fluid when streaming downstream. Thereby a high pressure region may have rotated to a different angular position dependent on an axial position. At the aforementioned positions the casing is consolidated and thus tight for cooling fluid, such that the cooling fluid can not pass the casing at the afore-defined positions. Thus, at the afore-defined positions cooling fluid is prohibited to be supplied to the working volume so that cooling of components in these regions is at least diminished. The above-defined positions may be in particular free of any cooling duct. Thus, cooling fluid can be saved, thus improving the efficiency of the turbine.

At the afore-defined positions conditions regarding pressure and temperature within the working volume may not be too severe for components in this region so that extensive cooling in this region may not be necessary. Nevertheless, the correct functioning of the turbine may be maintained.

According to a further embodiment of the turbine, the casing comprises a tip sealing portion having an axial position being at least approximately equal to an axial position of the blade tip of the rotor blade. In operation, for each revolution the rotor blade (or each rotor blade when plural rotor blades are provided) will approach the tip sealing portion of the casing, whereby a gap is formed between the tip sealing portion and the rotor blade tip of the rotor blade. During operation the tip sealing portion of the casing and the rotor blade tip of the rotor blade are subjected to high temperature, high pressure streaming fluid flowing through the gap between the tip sealing portion and the rotor blade tip. As the exit of the cooling duct is located upstream of the tip sealing portion and the rotor blade tip of the rotor blade, both the tip sealing portion and the rotor blade tip of the rotor blade may advantageously be cooled by cooling fluid exiting at the exit of the cooling duct.

According to a further embodiment of the turbine at least one of the following features holds: exits of the plurality of cooling ducts are angularly (in the circumferential direction) non-equally spaced (such that a first exit is circumferentially spaced apart from a second exit by a first angle distance and the second exit is circumferentially spaced apart from a third exit by a second angle distance different from the first angle distance); exits of the plurality of cooling ducts are differently dimensioned and/or shaped (to allow supply of different amounts or rates of cooling fluid); different cooling ducts of the plurality of cooling ducts are adapted (e.g. regarding their geometry, dimension and arrangement) to supply different amounts of cooling fluid. These provisions may aim at providing the more cooling fluid to a particular region (definable by an angular and axial range) the higher the temperature and/or pressure is in this region. Further, these provisions may aim at providing the less cooling fluid to a particular region (definable by an angular and axial range) the smaller the temperature and/or pressure is in this region. Thereby cooling may be reduced and restricted to the most critical regions.

In the following, further exemplary embodiments of the turbine will be described. However, these embodiments also apply for a method for operating a turbine described below.

The aspects defined above and further aspects of the present invention are apparent from the examples of embodiment to be described hereinafter and are explained with reference to the examples of embodiment. The invention will be described in more detail hereinafter with reference to examples of embodiment, but to which the invention is not limited.

According to another aspect, a method of converting energy is provided, wherein the method comprises supplying streaming fluid via at least one fluid entry duct being fixed at a casing; streaming the streaming fluid to at least one guide vane having a downstream edge, the guide vane being fixed at the casing; driving, by the streaming fluid, a rotor shaft rotatably supported within the casing; and supplying a cooling fluid through an exit of at least one cooling duct in the casing, wherein, with respect to a rotation axis of the rotor shaft, an angular position of a center of the exit of the cooling duct is spaced apart from an angular position of a portion of the downstream edge of the guide vane, offset by a first offset angle, by a first angular distance, and the angular position of the center of the exit of the cooling duct is spaced apart from an angular position of a center of the fluid entry duct, offset by a second offset angle, by a second angular distance, wherein the first angular distance is less than 10°, in particular less than 5°, and the second angular distance is less than 30°, in particular less than 15°.

The method may advantageously be used for operating a turbine to improve efficiency. The streaming fluid may be a high temperature, high pressure fluid, such as a gas exhausted from one or more combustion chambers. The streaming fluid is supplied via at least one fluid entry duct which is arranged such that a center of the fluid entry duct has a particular angular position, which may for example be measured using the angle ϕ in the cylinder coordinate system. Plural fluid entry ducts may be arranged in an annular like way forming a ring. In particular, the supply of the streaming fluid may heat up components of the turbine being close in their angular position to the angular position of the center of the fluid entry duct(s), offset by a second offset angle, more than those components being farther away regarding their angular position from the angular position of the fluid entry duct, offset by the second offset angle. Thus, the components of the turbine being closer to the angular position of the fluid entry duct, offset by the second offset angle, regarding their angular position may require more extensive cooling than components being farther away regarding their angular positions from the angular position of the fluid entry duct. The positions requiring more extensive cooling may also be referred to "high temperature spots". Thereby the "high temperature spots" may form an angular pattern which will change for changing axial positions due to a rotating streaming fluid.

The streaming fluid may stream to the at least one guide vane, wherein a part of the streaming fluid streams along a concave upstream surface of the guide vane and a part of the streaming fluid streams along a convex downstream surface of the guide vane. The convex side of the guide vane may also be referred to as suction side of the guide vane and the concave side of the guide vane may also be referred to as pressure side of the guide vane. The guide vane may guide the streaming fluid along its convex surface and along its concave surface such that a pressure of the fluid downstream the convex surface is lower than upstream the concave surface.

The streaming fluid streams along both surfaces of the guide vane to arrive at the downstream edge of the guide vane, where the convex surface of the guide vane joins the concave surface of the guide vane. Due to the losses caused by the leading edge blocking the flow and the turbulence of the flow from the pressure and suction sides of the aerofoil, there may be a lower pressure downstream the downstream edge of the guide vane relative to other regions downstream the convex surface of the guide vane. Between the lower pressure regions are relatively high pressure region, also referred to as "high pressure spot". The high pressure spot may be specified regarding its angular position, which may be represented as the cylinder coordinate angle ϕ. The streaming fluid is likely to leak into cavities away from the streaming path at these high pressure spots, because fluid may stream from high pressure to lower pressure.

In particular, components of the turbine having both an angular position close to the angular position of the high temperature spot and close to the position of the high pressure spot are subjected to a particular high temperature from the leaking gas which leads to an enhanced risk of impairments of these components. To avoid these impairments in particular these components located at or being reached through the critical gap having angular positions of high temperature spots and high pressure spots may be advantageously cooled by the described method.

According to an embodiment, the method further comprises directing the cooling fluid through the cooling duct to a tip of a rotor blade fixed at the rotor shaft and to a tip sealing portion of the casing. Cooling the tip sealing portion and/or the tip of the rotor blade will diminish malfunction of the turbine and also will increase durability and efficiency of the turbine.

In the following, further exemplary embodiments of the turbine will be described. However, these embodiments also apply for the method for operating a turbine.

It has to be noted that embodiments of the invention have been described with reference to different subject matters. In particular, some embodiments have been described with reference to method type claims, whereas other embodiments have been described with reference to apparatus type claims. However, a person skilled in the art will gather from the above and the following description that, unless otherwise notified, in addition to any combination of features belonging to one type of subject matter also any combination between features relating to different subject matters, in particular between features of the method type claims, and features of the apparatus type claims, is considered as to be disclosed with this document.

The aspects defined above and further aspects of the present invention are apparent from the examples of embodiment to be described hereinafter and are explained with reference to the examples of embodiment. The invention will be described in more detail hereinafter with reference to examples of embodiment, but to which the invention is not limited.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

### Brief Description of the Drawings

The invention will now be described by explaining exemplary embodiments by referring to the accompanying drawings. It shows in
- Figure 1: a schematic illustration of at least a part of a turbine according to an embodiment;
- Figure 2: a schematic illustration of a portion of the turbine illustrated in Figure 1 by rolling up the angular direction into a linear direction; and
- Figure 3A, 3B, and 3C: diagrams for illustrating angular positions and ranges according to an embodiment.

### Detailed Description

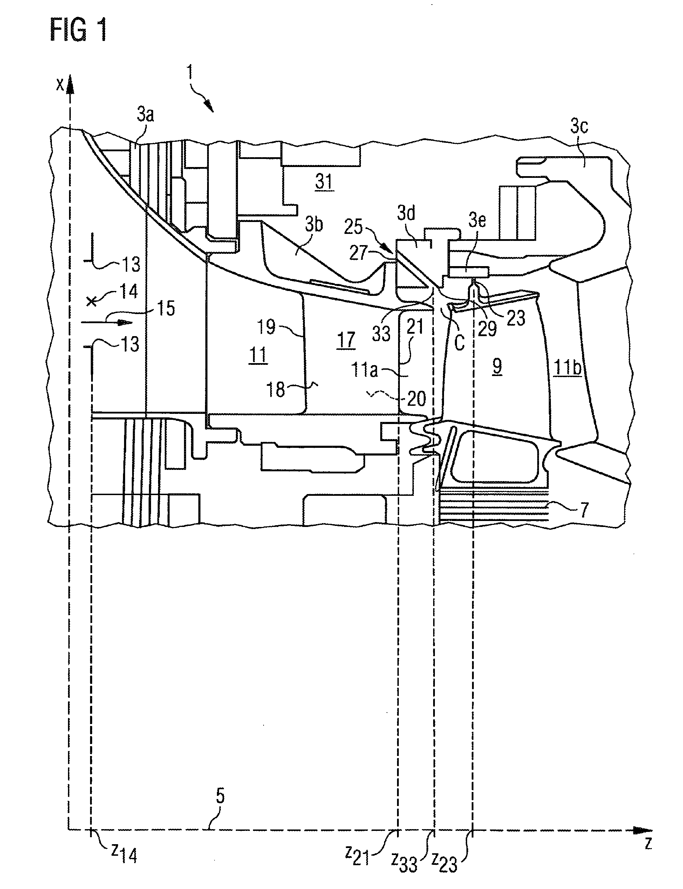

Figure 1 shows a schematic illustration of at least a part of a turbine 1 according to an embodiment. Thereby some parts not essential for defining the embodiment are broken away to simplify the drawing. The turbine 1 comprises a number of casing portions 3a, 3b, 3c, 3d in which a not illustrated rotor shaft is supported. The rotor shaft may be additionally supported by one or more bearings comprising plural pad bearings or fluid bearings (not illustrated). The rotor shaft may rotate around a rotation axis 5 which coincides with the z-axis of a coordinate system. A partially illustrated rotor blade holder 7 is connected to the rotor shaft. The rotor blade holder radially protrudes outwards and holds a rotor blade 9 such that the rotor blade 9 is arranged within a working volume 11, 11a, 11b through which a streaming fluid is supplied via a fluid entry duct 13 to stream along a direction labelled by an arrow 15.

The streaming fluid may be supplied through the fluid entry duct 13 - shown in a simplified manner - by one or more combustion chambers located further upstream (located further to the left-hand side of the fluid entry duct 13 in Figure 1). The streaming fluid carries kinetic energy and potential energy which is at least partially to be converted into rotational energy by the turbine 1. To achieve this energy conversion the streaming fluid is directed to a guide vane 17 having an upstream edge 19 and a downstream edge 21 joining an upstream surface 18 and downstream surface 20.

The streaming fluid passes along the concave upstream surface 18 of the guide vane 17 and passes along the convex downstream surface 20 of the guide vane 17 and is directed towards a rotor blade 9 which is connected via the rotor blade holder 7 to the not illustrated rotor shaft rotatable around the axis 5. The streaming fluid transfers at least a part of its energy to the rotor blade 9 to cause a circumferential movement of the rotor blade 9. Thereby the rotor shaft is rotated.

At a radially outer end the rotor blade 9 comprises a rotor blade tip 23 which during operation closely approaches a tip sealing portion 3e of the casing so that a gap as small as possible is formed between the rotor blade tip 23 and the tip sealing portion 3e of the casing. Thereby, streaming fluid flowing from the working volume 11a through the gap to the working volume 11b further downstream the rotor blade 9 is reduced which would otherwise impair the efficiency of the turbine 1. Nevertheless a portion of the streaming fluid having a higher pressure in the working volume 11a upstream the rotor blade 9 than in the working volume 11b downstream the rotor blade flows through the gap between the rotor blade tip 23 and the tip sealing portion 3e which causes heating up of the rotor blade tip 23 and the tip sealing portion 3e.

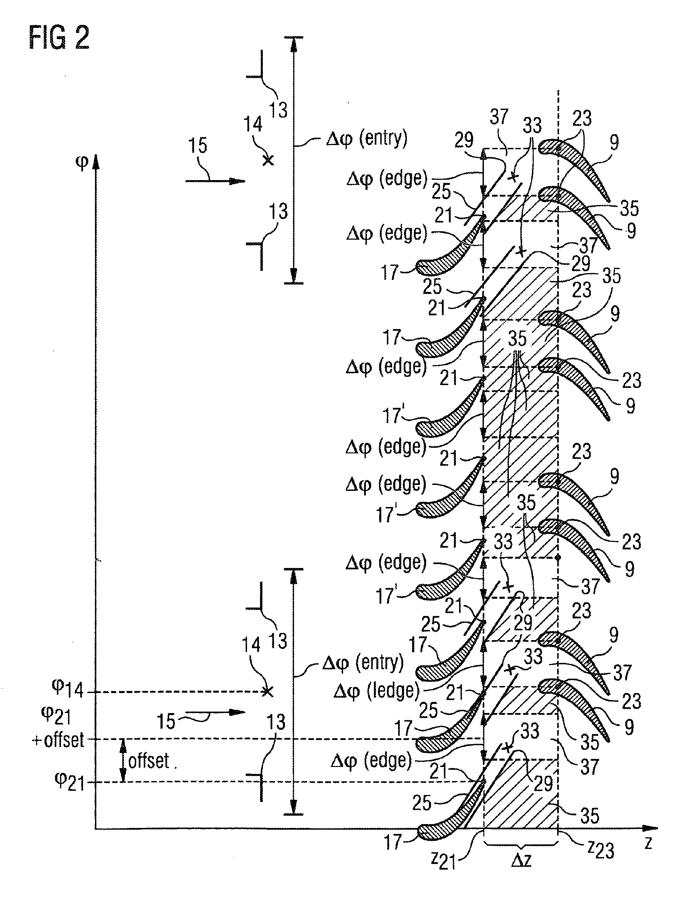

To cool these components of the turbine 1 and also adjacent components a cooling duct 25 is provided in the casing component 3d, wherein the cooling duct has an entry 27 and an exit 29. The cooling duct 25 may be formed by drilling a straight hole through the casing component 3d. In the illustrated embodiment the cooling duct 25 may be considered as an opening in the casing being delimited by a cylindrical inner surface of casing material. A center line of the cooling duct may be the symmetry axis of the cylindrical surface delimiting the cooling duct. This center line does not lie in the drawing plane of Figure 1, but instead is tilted relative to the drawing plane by 40°-80°, in particular by 50 to 70°, as will be explained in further detail with reference to Figure 2. Further, the symmetry axis of the cooling duct 25 projected into the x-z plane includes an angle with the z-axis of between 40 and 60°.

Portions of the turbine stator, such as portion 3b (part of the nozzle guide vane), portion 3a, portion 3d and further not illustrated portions of the turbine stator delimit a cooling volume 31 for accommodating cooling fluid. The cooling fluid may be supplied to the cooling volume 31 from a compressor, for example. The compressor may be located in a not illustrated upstream region. The cooling fluid accommodated in the cooling volume 31 may have a higher pressure than the streaming fluid in the working volume 11a such that the cooling fluid is driven through the cooling duct 25 and exits the cooling duct at the exit 29 towards the working volume 11a.

A center 33 of the exit 29 of the cooling duct 25 may be a center of an exit area of the exit 29 through which exit area the cooling fluid leaves the cooling duct to reach into the working volume 11a. The axial position z₂₁ of the downstream edge 21 of the guide vane 17, the axial position z₃₃ of the center 33 of the exit 29 of the cooling duct 25 and the axial position _{Z23} of the tip 23 of the rotor blade 9 are indicated in Figure 1. It appears that the axial position z₃₃ of the center 33 of the exit 29 of the cooling duct 25 lies between the axial position z₂₁ of the downstream edge 21 of the guide vane 17 and the axial position z₂₃ of the tip 23 of the rotor blade 9. Thereby, cooling fluid introduced through the cooling duct 25 may flow to the tip 23 and to the tip sealing portion 3e to cool these components.

Most of the cooling air may not enter the region 11a, but it may flow over the blade tip 23. The amount of cooling air "wasted" by entering volume 11a may be reduced by appropriately orienting and positioning the cooling duct 25.

While Figure 1 is a schematic illustration of a portion of a turbine, the turbine 1 may comprise plural guide vanes arranged at at least approximately same axial positions forming a row of guide vanes spaced apart in angular positions. Further, the turbine 1 may comprise plural rotor blades arranged at at least approximately same axial positions forming a row of rotor blades. Further, the turbine 1 may comprise several rows of guide vanes arranged at different axial positions which alternate with plural rows of rotor blades arranged at different axial positions.

Not illustrated in Figure 1 are pad bearings via which the rotor shaft is rotatably supported within the casing 3 reducing friction.

According to a particular choice a position in the x-z plane illustrated in Figure 1 may have a value 0 for its cylinder coordinate ϕ.

Figure 2 is a schematic illustration of a portion of the turbine 1, wherein the structure is illustrated in an unrolled view, wherein a circumferential direction of the turbine 1 is unrolled into a straight line. Thereby, positions along a circumferential direction of the turbine 1 are defined by the angle ϕ in cylinder coordinates. In the unrolled illustration of Figure 2 plural rotor blades 9 are illustrated having at least approximately the same axial position. The number of rotor blades in one rotor blade disk may vary between 12 rotor blades up to 70 rotor blades according to embodiments. Each rotor blade 9 comprises a rotor blade tip 23 having an axial position _{Z23}. Although different rotor blade tips 23 of the rotor blades 9 in one rotor blade disk have essentially the same axial position z₂₃, they have different angular positions which may be represented by different azimuthal angles ϕ₂₃, wherein ϕ is the cylinder coordinate measured along the vertical axis in Fig. 2.

The turbine 1 comprises plural guide vanes 17, 17' which substantially have a same axial position. Each of the guide vanes comprises a concave upstream surface 18 and a convex downstream surface 20 which are joined at a downstream edge 21. Although downstream edges 21, 21' of the plural guide vanes 17, 17' at least approximately have a same axial position z₂₁, they have different angular positions, represented by different angles ϕ21.

The turbine 1 illustrated in the unrolled view in Figure 2 further comprises plural fluid entry ducts 13 from which only two are illustrated in Figure 2. Through the fluid entry ducts 13 streaming fluid exiting an upstream combustion chamber is introduced in a direction labelled by an arrow 15. Each fluid entry duct 13 can be associated with a center 14 of the fluid entry duct which may be an entry area center, such as a center of mass of an evenly loaded entry area. Although the plural fluid entry ducts may have a same axial position z₁₃, they have different angular positions, which may be represented by different angles ϕ14.

According to an embodiment, in regions having particular ϕ values and having particular z values the casing of the turbine is consolidated such that no cooling fluid can enter from a cooling volume to the working volume 11a, 11b, wherein the rotor blades 9 rotate. These consolidated regions have axial positions between the axial position of the downstream edge 21, i.e. z₂₁, and the axial position of the blade tip 23 of the rotor blades 9, i.e. _{Z23}. Further, the consolidated regions of the casing haves ϕ values lying outside ranges Δϕ (edge) positioned at the plural different angular positions ϕ21 of the downstream edges 21 of the guide vanes 17, 17' shifted by an offset angle. In the illustrated embodiment the offset angle amounts to about half of a difference between angular positions of downstream edges of adjacent guide vanes in a same row of guide vanes (thus having same axial positions). In other embodiments the offset angle may assume different values also depending on axial positions/differences of the guide vane downstream edges, the center of the cooling duct, the location C of the critical gap illustrated in Fig. 1, the geometry and/or orientation of the guide vane and an orientation of the cooling duct.

The dependence of the angular positions of the consolidated regions on the axial distances between the downstream edges and the axial positions of the consolidated regions may be due to a spiralling motion of the streaming fluid (implying that the direction 15 of the streaming fluid may have a component in the direction of ϕ). The spiralling motion of the streaming fluid is suppressed in Fig. 2 for simplification but must be taken into account to appropriately define the axial and angular positions of both the consolidated regions 35 and the regions 37 comprising an exit 29 of a cooling duct 25.

Further, the consolidated regions of the casing are also formed in ranges of ϕ values which lie outside of regions Δϕ (entry) positioned at the plural centers 14 of the fluid entry ducts 13. In the embodiment illustrated in Fig. 2 the ranges Δϕ (edge) and Δϕ (entry) are centered to the angular position of the downstream edge 21 of the guide vane 17 and the center 14 of the entry duct 13, respectively, i.e. the first angle offset and the second angle offset, respectively, is set to zero in order not to obscure the drawing. In other embodiments the first angle offset and the second angle offset are greater than zero and depend, due to rotating streaming fluid, on relative axial positions of the center 14 of the entry duct 13 and the center 33 of the exit of the cooling duct 25 and on relative axial positions of the downstream edge 21 of the guide vane 17 and the center 33 of the exit of the cooling duct 25.

The ranges Δϕ (edge) and Δϕ (entry) may assume different sizes depending on the particular application. Possible values for Δϕ (edge) are for example 10°, 5°, or 2° and possible values for Δϕ (entry) may be 60°, 30°, 15°, or 10°. The consolidated regions of the casing are the edged regions 35 in Fig. 2 between the axial positions z₂₁ and _{Z23}. According to an embodiment exits 29 of cooling ducts 25 are only present in regions 37 outside the consolidated regions 35. However, in regions of the casing not lying within the range Δz between z₂₁ and z₂₃ further exits 29 of further cooling ducts 25 may be present.

In particular, in regions 37 increased temperature and increased pressure may prevail compared to the temperature and pressure in regions 35 during operation of the turbine 1. Thus, especially in these high temperature, high pressure regions cooling of components of the turbine, in particular cooling of the rotor blade tips 23 and the tip sealing portions 3e is enabled by introducing cooling fluid from the cooling volume 31 through the cooling ducts 25 exiting at the exits 29 to the radially outer cavity comprising the tip seal portions 3e. Further, by providing no exits of cooling ducts within the hatched regions 35 in which temperature and pressure is decreased compared to the regions 37 unnecessary cooling can be avoided, thus in particular saving supply of cooling fluid. Thus, the efficiency of the turbine may be improved.

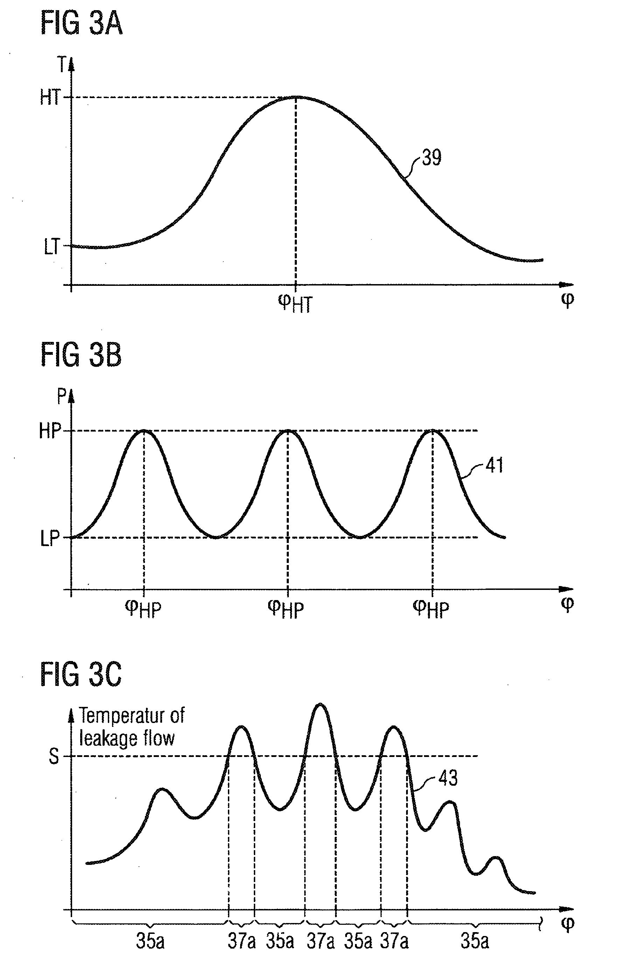

Figs. 3A, 3B and 3C illustrate an alternative embodiment to define consolidated regions of the casing and regions that may comprise exits of cooling ducts.

Figure 3A depicts a diagram illustrating a distribution of temperature (vertical axis) in dependence of an angular position (horizontal axis), which may be represented by a circumferential position or a cylinder coordinate ϕ. From a low temperature value LT the temperature increases to reach a high temperature value HT at a ϕ value ϕ_{HT} after which the temperature decreases down to the value LT. The center of the maximum temperature HT and the width of the Gauss-like curve 39 depends on angular positions and constitution of fluid entry ducts arranged in an upstream region of the turbine 1 and/or on the position of the combustion chambers within the fluid entry ducts further upstream. The temperature distribution illustrated in Figure 3A may represent the temperature distribution at an axial position of the location C indicated in Fig. 1 between the downstream edge 21 of the guide vane 17 and an upstream edge of the rotor blade 9. The location C may be a critical axial position at which high pressure, high temperature fluid may enter a cavity located radially outward and upstream from the rotor blade tip 23. The streaming fluid will reach the blade tip 23 at other angular and axial positions and the exit 29 of the cooling duct 25 may be located such that it cools the blade tip and the sealing portion 3e where the streaming fluid leaking from the main flow path through a gap at location C reaches the blade tip 23.

Figure 3B depicts a diagram illustrating a pressure distribution 41 (vertical axis) in dependence of an angular position which may be represented by a cylinder coordinated ϕ or by a circumferential position. It can be observed that the pressure varies depending on ϕ from a low pressure LP to a high pressure HP, wherein the maximum values HP are observed for ϕ values ϕ_{HP}. The positions ϕ_{HP} may depend on angular positions of the downstream edges 21 of guide vanes 17. In particular, the positions ϕ_{HP} may be between, in particular half-way between, angular positions of downstream edges 21 of adjacent (i.e. neighbouring) guide vanes 17, but may also be slightly smaller or greater than these angular positions and may depend on other parameters as mentioned above. The variation of pressure may be due to the so-called wake effect in a region downstream of a row of guide vanes.

Since both, the flow path of the streaming fluid governed by the pressure distribution and the temperature of the fluid determine which components of the turbine 1 may suffer damage due to high temperature, the distributions of the temperature and the pressure may be combined to arrive at a tip leakage temperature, as illustrated in Figure 3C as curve 43. Curve 43 may for example be derived by forming a sum, a product or the like from curves 39 and 41 illustrated in Figs. 3A and 3B, respectively. Angular positions having a high risk of damage may be identified by determining angular positions of the curve 43 which are above a threshold S. In order to diminish the risk of damage in regions 37a above the threshold S cooling fluid may be supplied to these regions 37a by providing exits of cooling ducts especially or exclusively at those angular positions within the regions 37a. In other angular regions 35a where the leakage temperature falls below the threshold S the casing portions separating the working volume 11a, 11b from the cooling volume 31 may be consolidated and dense for the cooling fluid such that no cooling fluid may flow from the cooling volume 31 to the working volume 11a, 11b. Thus, unnecessary cooling of components not affected by both high pressure and high temperature values can be avoided.

The present invention is not limited to the described embodiments.

It could be summarised that the invention is related to a turbine for converting energy, the turbine comprising a casing; a rotor shaft rotatably, around a rotation axis 5 extending in an axial direction, supported within the casing; at least one fluid entry duct 13 formed in the casing for supplying streaming fluid, the fluid entry duct 13 being at a first circumferential position; at least one guide vane 17 having a downstream edge 21, the guide vane being fixed in the casing; at least one rotor blade 9 having a rotor blade tip 23 at an radially outer end of the rotor blade 9, the rotor blade 9 being fixed at the rotor shaft; at least one cooling duct 25 in the casing, the cooling duct having an exit 29, wherein the exit 29 of the cooling duct 25 is directed to a cavity upstream of the rotor blade tip 23 for cooling the rotor blade tip 23 and wherein the cooling duct 25 is arranged in position and size such that, during operation of the turbine, a higher amount of cooling fluid is provided to the cavity in a first region having substantially the same circumferential position as the first circumferential position and a lesser amount of cooling fluid is provided to the cavity at other circumferential positions than the first circumferential position.

This allows to distribute cooling air in the most effective way, taking account of the temperature and pressure variations in the flowpath air, specifically taking into account that, because of the limited number of burners in the combustion system, there is a circumferential pattern of high temperature and lower temperature regions in the flowpath, with normally the same number of high temperature regions as there are burners.

There is also a circumferential pattern of higher and lower pressures around the flowpath because of the wake effect from the nozzle guide vanes that are located immediately upstream of the tip seals. Each nozzle guide vane trailing edge causes a high and low pressure region downstream of the component. Where the flowpath pressure is highest, air will be driven into the cavity upstream of the tip seal. Some of this air will pass between the tip seal and turbine blade tip, and re-enter the flowpath downstream of the turbine blade. The inventive cooling will provide a solution against this hot gas leakage path. The rest of this air will re-enter the flowpath upstream of the turbine blade, but at a circumferential location where the pressure is lower.

The circumferential location where the tip seals will see the most severe conditions is where the higher pressure regions described above coincide with the highest temperatures caused by the burners. According to the invention, most cooling air should be supplied at these locations. At those locations where the working fluid driven into the cavity is less hot, less cooling air will be needed to protect the tip seals.

A central idea is to space the cooling holes that are providing cooling air to the tip seal in a non-symmetrical circumferential pattern, and not the same for every tip seal. This can be done because it is where the highest flowpath temperatures and the highest flowpath pressures exist at the same location that maximum cooling air should be supplied. The holes may be drilled into the tip seals, or they may be drilled into the carrier ring that supports the nozzle and the tip seals. This may depend on the engine design.

With the invention, temperature and pressure variations can be addressed. Advantageously, the cooling holes would be spaced so that where flowpath temperature and pressure both are high a maximum cooling is provided. In cicumferential positions at which flowpath pressure is high but temperature is low, less cooling may be provided by a lesser number of cooling holes. If flowpath pressure is low and temperature is high, even less cooling may be provided. Finally, if flowpath temperature and pressure both are low, a minimum or zero cooling should be supplied.

## Claims

1. Turbine for converting energy, the turbine comprising:
a casing (3a, 3b, 3c, 3d, 3e) ;
a rotor shaft rotatably, around a rotation axis (5) extending in an axial direction, supported within the casing;
at least one fluid entry duct (13) formed in the casing for supplying streaming fluid;
at least one guide vane (17) having a downstream edge (21), the guide vane being fixed in the casing;
at least one cooling duct (25) in the casing, the cooling duct having an exit (29),
wherein, with respect to the rotation axis,
an angular position (ϕ₃₃) of a center (33) of the exit (29) of the cooling duct (25) is spaced apart from an angular position (ϕ₂₁) of a portion of the downstream edge (21) of the guide vane, offset by a first offset angle, by a first angular distance, and
the angular position (ϕ₃₃) of the center of the exit of the cooling duct is spaced apart from an angular position (ϕ₁₄) of a center (14) of the fluid entry duct (13), offset by a second offset angle, by a second angular distance,
wherein the first angular distance is less than 10°, in particular less than 5°, and the second angular distance is less than 30°, in particular less than 15°,
wherein the center (33) of the exit (29) of the at least one cooling duct (25) is arranged downstream of the at least one guide vane (17),
wherein a plurality of cooling ducts comprising the at least one cooling duct is arranged such that where streaming fluid temperature and pressure both are high a maximum cooling is provided.

2. Turbine according to claim 1, wherein the first angular distance is less than 20%, in particular less than 10%, of an angular extent of the guide vane.

3. Turbine according to claim 1 or 2, wherein the second angular distance is less than three times, in particular less than two times, an angular extent of the fluid entry duct.

4. Turbine according to one of claims 1 to 3, wherein
the first offset angle depends on a distance between an axial position (z₂₁) of the downstream edge (21) of the at least one guide vane (17) and an axial position (z₃₃) of the center of the exit (29) of the cooling duct (25), and
the second offset angle depends on a distance between an axial position (z₁₄) of the center of the fluid entry duct and an axial position (z₃₃) of the center of the exit (29) of the cooling duct (25).

5. Turbine according to one of claims 1 to 4, wherein
the first offset angle depends on a geometry and/or an orientation of the guide vane (17).

6. Turbine according to one of claims 1 to 5, further comprising
a further guide vane having a further downstream edge, wherein an axial position of the downstream edge (21) of the at least one guide vane (17) equals an axial position of the downstream edge of the further guide vane,
wherein the first offset angle depends on a distance between an angular position of the downstream edge (21) of the at least one guide vane (17) and an angular position of the downstream edge of the further guide vane.

7. Turbine according to one of claims 1 to 6, wherein the cooling duct (25) in the casing has an entry (27), wherein a line defined by a center of the entry (27) and the center (33) of the exit (29) of the cooling duct (25) and projected into a plane (y-z) orthogonal to a radial direction (x) of extent of the guide vane (9) includes an angle with a line defined by a projection of a point at the downstream edge (21) into the plane and a projection of a point at an upstream edge of the guide vane (17) into the plane,
wherein the angle is less than 30°, in particular less than 15°.

8. Turbine according to claim 7, wherein, along the axial direction, the exit (29) of the cooling duct (25) is arranged downstream relative to the entry (27) of the cooling duct (25).

9. Turbine according to one of claims 1 to 8, wherein portions of the casing define a cooling volume (31) for accommodating cooling fluid, the cooling fluid being in communication, via the cooling duct (25), with a working volume (11, 11a, 11b) for accommodating the streaming fluid.

10. Turbine according to one of claims 1 to 9, further comprising:
at least one rotor blade (9) having a rotor blade tip (23) at an radially outer end of the rotor blade (9), the rotor blade (9) being fixed at the rotor shaft.

11. Turbine according to claim 10, wherein, along the axial direction, the downstream edge (21) of the guide vane (17) is located at a first axial position (z₂₁) and the rotor blade tip (23) is located at a second axial position (z₂₃), wherein an axial position (z₃₃) of a center (33) of the exit (29) of the cooling duct (25) lies between the first axial position and the second axial position.

12. Turbine according to claim 11, wherein portions of the casing (3a,3b,3c,3d,3e) defining the cooling volume (31) are consolidated for cooling fluid at positions
having an axial position between the first axial position and the second axial position and
having an angular position
a) farther away than 20°, in particular 15°, from the angular position of the portion of the downstream edge of the guide vane, offset by the first offset angle, or
b) farther away than 35°, in particular 40°, from the angular position of the center of the fluid entry duct, offset by the second offset angle.

13. Turbine according to one of claims 1 to 11, when including claim 10,
wherein the casing (3a,3b,3c,3d,3e) comprises a tip sealing portion (3e) having an axial position being at least approximately equal to an axial position (z₂₃) of the rotor blade tip (23) of the rotor blade (9).

14. Turbine according to any of the preceding claims, wherein at least one of the following features holds:
exits of the plurality of cooling ducts are angularly non-equally spaced;
exits of the plurality of cooling ducts are differently dimensioned and/or shaped;
different cooling ducts of the plurality of cooling ducts are adapted to supply different amounts of cooling fluid.

15. Method of converting energy, the method comprising:
supplying streaming fluid via at least one fluid entry duct (13) being fixed at a casing (3a,3b,3c,3d);
streaming the streaming fluid to at least one guide vane (17) having a downstream edge (21), the guide vane being fixed at the casing;
driving, by the streaming fluid, a rotor shaft rotatably supported within the casing; and
supplying a cooling fluid through an exit (29) of at least one cooling duct (25) in the casing,
wherein, with respect to a rotation axis of the rotor shaft, an angular position (ϕ₃₃) of a center (33) of the exit (29) of the cooling duct (25) is spaced apart from an angular position (ϕ₂₁) of a portion of the downstream edge (21) of the guide vane (17), offset by a first offset angle, by a first angular distance, and
the angular position (ϕ₃₃) of the center (33) of the exit (29) of the cooling duct (25) is spaced apart from an angular position (ϕ₁₄) of a center (14) of the fluid entry duct (13),
offset by a second offset angle, by a second angular distance,
wherein the first angular distance is less than 10°, in particular less than 5°, and the second angular distance is less than 30°, in particular less than 15°,
wherein the center (33) of the exit (29) of the at least one cooling duct (25) is arranged downstream of the at least one guide vane (17),
wherein a plurality of cooling ducts comprising the at least one cooling duct is arranged such that where streaming fluid temperature and pressure both are high a maximum cooling is provided.

16. Method according to claim 15,
further comprising:
directing the cooling fluid through the cooling duct (25) to a tip (23) of a rotor blade (9) fixed at the rotor shaft and to a tip sealing portion (3e) of the casing.

## Patentansprüche

1. Turbine zur Umwandlung von Energie, wobei die Turbine umfasst:
ein Gehäuse (3a, 3b, 3c, 3d, 3e);
eine Rotorwelle, die um eine sich in einer axialen Richtung erstreckende Drehachse (5) drehbar innerhalb des Gehäuses gelagert ist;
mindestens einen Fluideintrittskanal (13), der in dem Gehäuse ausgebildet ist, zum Zuführen von strömendem Fluid;
mindestens eine Leitschaufel (17), die eine stromabwärtige Kante (21) aufweist, wobei die Leitschaufel in dem Gehäuse befestigt ist;
mindestens einen Kühlkanal (25) in dem Gehäuse, wobei der Kühlkanal einen Ausgang (29) aufweist,
wobei, in Bezug auf die Drehachse,
eine Winkelposition (ϕ₃₃) eines Mittelpunkts (33) des Ausgangs (29) des Kühlkanals (25) von einer Winkelposition (ϕ₂₁) eines Abschnitts der stromabwärtigen Kante (21) der Leitschaufel,
der um einen ersten Versatzwinkel versetzt ist, um einen ersten Winkelabstand beabstandet ist, und
die Winkelposition (ϕ₃₃) des Mittelpunkts des Ausgangs des Kühlkanals von einer Winkelposition (ϕ₁₄) eines Mittelpunkts (14) des Fluideintrittskanals (13), der um einen zweiten Versatzwinkel versetzt ist, um einen zweiten Winkelabstand beabstandet ist,
wobei der erste Winkelabstand kleiner als 10° ist,
insbesondere kleiner als 5°, und der zweite Winkelabstand kleiner als 30° ist, insbesondere kleiner als 15°,
wobei der Mittelpunkt (33) des Ausgangs (29) des mindestens einen Kühlkanals (25) stromabwärts der mindestens einen Leitschaufel (17) angeordnet ist,
wobei eine Vielzahl von Kühlkanälen, die den mindestens einen Kühlkanal umfasst, derart angeordnet ist, dass dort, wo Temperatur und Druck des strömenden Fluids beide hoch sind,
eine maximale Kühlung gewährleistet ist.

2. Turbine nach Anspruch 1, wobei der erste Winkelabstand weniger als 20 %, insbesondere weniger als 10 %, einer Winkelerstreckung der Leitschaufel beträgt.

3. Turbine nach Anspruch 1 oder 2, wobei der zweite Winkelabstand kleiner als das Dreifache, insbesondere kleiner als das Zweifache, einer Winkelerstreckung des Fluideintrittskanals ist.

4. Turbine nach einem der Ansprüche 1 bis 3, wobei der erste Versatzwinkel von einem Abstand zwischen einer axialen Position (z₂₁) der stromabwärtigen Kante (21) der mindestens einen Leitschaufel (17) und einer axialen Position (z₃₃) des Mittelpunkts des Ausgangs (29) des Kühlkanals (25) abhängt, und der zweite Versatzwinkel von einem Abstand zwischen einer axialen Position (z₁₄) des Mittelpunkts des Fluideintrittskanals und einer axialen Position (z₃₃) des Mittelpunkts des Ausgangs (29) des Kühlkanals (25) abhängt.

5. Turbine nach einem der Ansprüche 1 bis 4, wobei der erste Versatzwinkel von einer Geometrie und/oder einer Ausrichtung der Leitschaufel (17) abhängt.

6. Turbine nach einem der Ansprüche 1 bis 5, welche ferner umfasst:
eine weitere Leitschaufel, die eine weitere stromabwärtige Kante aufweist,
wobei eine axiale Position der stromabwärtigen Kante (21) der mindestens einen Leitschaufel (17) gleich einer axialen Position der stromabwärtigen Kante der weiteren Leitschaufel ist,
wobei der erste Versatzwinkel von einem Abstand zwischen einer Winkelposition der stromabwärtigen Kante (21) der mindestens einen Leitschaufel (17) und einer Winkelposition der stromabwärtigen Kante der weiteren Leitschaufel abhängt.

7. Turbine nach einem der Ansprüche 1 bis 6, wobei der Kühlkanal (25) in dem Gehäuse einen Eingang (27) aufweist, wobei eine Linie, die durch einen Mittelpunkt des Eingangs (27) und den Mittelpunkt (33) des Ausgangs (29) des Kühlkanals (25) definiert ist und in eine Ebene (y-z) projiziert ist, die zu einer radialen Erstreckungsrichtung (x) der Leitschaufel (9) orthogonal ist, einen Winkel mit einer Linie einschließt, die durch eine Projektion eines Punktes an der stromabwärtigen Kante (21) in die Ebene und einer Projektion eines Punktes an einer stromaufwärtigen Kante der Leitschaufel (17) in die Ebene definiert ist, wobei der Winkel kleiner als 30° ist, insbesondere kleiner als 15°.

8. Turbine nach Anspruch 7, wobei entlang der axialen Richtung der Ausgang (29) des Kühlkanals (25) stromabwärts bezüglich des Eingangs (27) des Kühlkanals (25) angeordnet ist.

9. Turbine nach einem der Ansprüche 1 bis 8, wobei Abschnitte des Gehäuses ein Kühlvolumen (31) zur Aufnahme von Kühlfluid definieren, wobei das Kühlfluid über den Kühlkanal (25) mit einem Arbeitsvolumen (11, 11a, 11b) zur Aufnahme des strömenden Fluids in Kommunikation steht.

10. Turbine nach einem der Ansprüche 1 bis 9, welche ferner umfasst:
mindestens eine Laufschaufel (9), die eine Laufschaufelspitze (23) an einem radial äußeren Ende der Laufschaufel (9) aufweist, wobei die Laufschaufel (9) an der Rotorwelle befestigt ist.

11. Turbine nach Anspruch 10, wobei entlang der axialen Richtung die stromabwärtige Kante (21) der Leitschaufel (17) an einer ersten axialen Position (z₂₁) angeordnet ist und die Laufschaufelspitze (23) an einer zweiten axialen Position (z₂₃) angeordnet ist, wobei eine axiale Position (z₃₃) eines Mittelpunkts (33) des Ausgangs (29) des Kühlkanals (25) zwischen der ersten axialen Position und der zweiten axialen Position liegt.

12. Turbine nach Anspruch 11, wobei Abschnitte des Gehäuses (3a, 3b, 3c, 3d, 3e), die ein Kühlvolumen (31) definieren, dicht für Kühlfluid sind an Positionen,
die eine axiale Position zwischen der ersten axialen Position und der zweiten axialen Position aufweisen und
eine Winkelposition aufweisen,
a) die weiter als 20°, insbesondere als 15°, von der Winkelposition des Abschnitts der stromabwärtigen Kante der Leitschaufel entfernt ist, der um den ersten Versatzwinkel versetzt ist, oder
b) die weiter als 35°, insbesondere als 40°, von der Winkelposition des Mittelpunkts des Fluideintrittskanals entfernt ist, der um den zweiten Versatzwinkel versetzt ist.

13. Turbine nach einem der Ansprüche 1 bis 11, wenn sie Anspruch 10 beinhalten,
wobei das Gehäuse (3a, 3b, 3c, 3d, 3e) einen Spitzendichtabschnitt (3e) umfasst, der eine axiale Position aufweist, die wenigstens annähernd gleich einer axialen Position (z₂₃) der Laufschaufelspitze (23) der Laufschaufel (9) ist.

14. Turbine nach einem der vorhergehenden Ansprüche, wobei mindestens eines der folgenden Merkmale vorliegt:
Ausgänge der Vielzahl von Kühlkanälen sind ungleichmäßig winkelbeabstandet;
Ausgänge der Vielzahl von Kühlkanälen haben unterschiedliche Abmessungen und/oder sind unterschiedlich geformt;
verschiedene Kühlkanäle der Vielzahl von Kühlkanälen sind dazu eingerichtet, unterschiedliche Mengen von Kühlfluid zuzuführen.

15. Verfahren zur Umwandlung von Energie, wobei das Verfahren umfasst:
Zuführen von strömendem Fluid über mindestens einen Fluideintrittskanal (13), der an einem Gehäuse (3a, 3b, 3c,
3d) befestigt ist;
Bewirken des Strömens des strömenden Fluids zu mindestens einer Leitschaufel (17), die eine stromabwärtige Kante (21) aufweist, wobei die Leitschaufel an dem Gehäuse befestigt ist;
Antreiben, durch das strömende Fluid, einer Rotorwelle, die drehbar innerhalb des Gehäuses gelagert ist; und
Zuführen eines Kühlfluids durch einen Ausgang (29) mindestens einen Kühlkanals (25) in dem Gehäuse,
wobei, in Bezug auf eine Drehachse der Rotorwelle,
eine Winkelposition (ϕ₃₃) eines Mittelpunkts (33) des Ausgangs (29) des Kühlkanals (25) von einer Winkelposition (ϕ₂₁) eines Abschnitts der stromabwärtigen Kante (21) der Leitschaufel (17), der um einen ersten Versatzwinkel versetzt ist, um einen ersten Winkelabstand beabstandet ist, und
die Winkelposition (ϕ₃₃) des Mittelpunkts (33) des Ausgangs (29) des Kühlkanals (25) von einer Winkelposition (ϕ₁₄) eines Mittelpunkts (14) des Fluideintrittskanals (13), der um einen zweiten Versatzwinkel versetzt ist, um einen zweiten Winkelabstand beabstandet ist,
wobei der erste Winkelabstand kleiner als 10° ist,
insbesondere kleiner als 5°, und der zweite Winkelabstand kleiner als 30° ist, insbesondere kleiner als 15°,
wobei der Mittelpunkt (33) des Ausgangs (29) des mindestens einen Kühlkanals (25) stromabwärts der mindestens einen Leitschaufel (17) angeordnet ist,
wobei eine Vielzahl von Kühlkanälen, die den mindestens einen Kühlkanal umfasst, derart angeordnet ist, dass dort, wo Temperatur und Druck des strömenden Fluids beide hoch sind,
eine maximale Kühlung gewährleistet ist.

16. Verfahren nach Anspruch 15,
welches ferner umfasst:
Leiten des Kühlfluids durch den Kühlkanal (25) zu einer Spitze (23) einer an der Rotorwelle befestigten Laufschaufel (9) und zu einem Spitzendichtabschnitt (3e) des Gehäuses.

## Revendications

1. Turbine pour convertir une énergie, la turbine comprenant :
un carter (3a, 3b, 3c, 3d, 3e) ;
un arbre de rotor rotatif autour d'un axe de rotation (5) s'étendant dans un sens axial, supporté à l'intérieur du carter ;
au moins une conduite d'entrée de fluide (13) formée dans le carter pour fournir un fluide en écoulement ;
au moins une aube directrice (17) ayant un bord aval (21), l'aube directrice étant fixée dans le carter ;
au moins une conduite de refroidissement (25) dans le carter, la conduite de refroidissement ayant une sortie (29),
dans laquelle, par rapport à l'axe de rotation,
une position angulaire (ϕ₃₃) d'un centre (33) de la sortie (29) de la conduite de refroidissement (25) est espacée d'une position angulaire (ϕ₂₁) d'une partie du bord aval (21) de l'aube directrice, décalé d'un premier angle de décalage, d'une première distance angulaire, et
la position angulaire (ϕ₃₃) du centre de la sortie de la conduite de refroidissement est espacée d'une position angulaire (ϕ₁₄) d'un centre (14) de la conduite d'entrée de fluide (13), décalé d'un deuxième angle de décalage, d'une deuxième distance angulaire,
dans laquelle la première distance angulaire est inférieure à 10°, en particulier inférieure à 5°, et la deuxième distance angulaire est inférieure à 30°, en particulier inférieure à 15°,
dans laquelle le centre (33) de la sortie (29) de l'au moins une conduite de refroidissement (25) est agencé en aval de l'au moins une aube directrice (17),
dans laquelle une pluralité de conduites de refroidissement comprenant l'au moins une conduite de refroidissement est agencée de telle manière que, lorsque la température et la pression de fluide en écoulement sont toutes les deux élevées,
un refroidissement maximum est fourni.

2. Turbine selon la revendication 1, dans laquelle la première distance angulaire est inférieure à 20%, en particulier inférieure à 10%, d'une extension angulaire de l'aube directrice.

3. Turbine selon la revendication 1 ou 2, dans laquelle la deuxième distance angulaire est inférieure à trois fois, en particulier inférieure à deux fois, une extension angulaire de la conduite d'entrée de fluide.

4. Turbine selon l'une quelconque des revendications 1 à 3, dans laquelle le premier angle de décalage dépend d'une distance entre une position axiale (z₂₁) du bord aval (21) de l'au moins une aube directrice (17) et une position axiale (z₃₃) du centre de la sortie (29) de la conduite de refroidissement (25), et
le deuxième angle de décalage dépend d'une distance entre une position axiale (z₁₄) du centre de la conduite d'entrée de fluide et une position axiale (z₃₃) du centre de la sortie (29) de la conduite de refroidissement (25).

5. Turbine selon l'une quelconque des revendications 1 à 4, dans laquelle le premier angle de décalage dépend d'une géométrie et/ou d'une orientation de l'aube directrice (17).

6. Turbine selon l'une quelconque des revendications 1 à 5, comprenant en outre
une autre aube directrice ayant un autre bord aval, dans laquelle une position axiale du bord aval (21) de l'au moins une aube directrice (17) est égale à une position axiale du bord aval de l'autre aube directrice,
dans laquelle le premier angle de décalage dépend d'une distance entre une position angulaire du bord aval (21) de l'au moins une aube directrice (17) et une position angulaire du bord aval de l'autre aube directrice.

7. Turbine selon l'une quelconque des revendications 1 à 6, dans laquelle la conduite de refroidissement (25) dans le carter a une entrée (27), dans laquelle une ligne définie par un centre de l'entrée (27) et le centre (33) de la sortie (29) de la conduite de refroidissement (25) et projetée dans un plan (y-z) orthogonal à un sens radial (x) d'extension de l'aube directrice (9) inclut un angle avec une ligne définie par une projection d'un point au niveau du bord aval (21) dans le plan et une projection d'un point au niveau d'un bord amont de l'aube directrice (17) dans le plan, dans laquelle l'angle est inférieur à 30°, en particulier inférieur à 15°.

8. Turbine selon la revendication 7, dans laquelle, le long du sens axial, la sortie (29) de la conduite de refroidissement (25) est agencée en aval par rapport à l'entrée (27) de la conduite de refroidissement (25).

9. Turbine selon l'une quelconque des revendications 1 à 8, dans laquelle des parties du carter définissent un volume de refroidissement (31) pour recevoir un fluide de refroidissement, le fluide de refroidissement étant en communication, par l'intermédiaire de la conduite de refroidissement (25), avec un volume de travail (11, 11a, 11b) pour recevoir le fluide en écoulement.

10. Turbine selon l'une quelconque des revendications 1 à 9, comprenant en outre
au moins une pale (9) de rotor ayant une pointe (23) de pale de rotor à une extrémité radialement extérieure de la pale (9) de rotor, la pale (9) de rotor étant fixée à l'arbre de rotor.

11. Turbine selon la revendication 10, dans laquelle, le long du sens axial, le bord aval (21) de l'aube directrice (17) est situé en une première position axiale (z₂₁) et la pointe (23) de pale de rotor est située en une deuxième position axiale (z₂₃), dans laquelle une position axiale (z₃₃) d'un centre (33) de la sortie (29) de la conduite de refroidissement (25) se situe entre la première position axiale et la deuxième position axiale.

12. Turbine selon la revendication 11, dans laquelle des parties du carter (3a, 3b, 3c, 3d, 3e) définissant le volume de refroidissement (31) sont consolidées pour un fluide de refroidissement en des positions
ayant une position axiale entre la première position axiale et la deuxième position axiale et
ayant une position angulaire
a) plus distante que 20°, en particulier 15°, de la position angulaire de la partie du bord aval de l'aube directrice, décalée du premier angle de décalage, ou
b) plus distante que 35°, en particulier 40°, de la position angulaire du centre de la conduite d'entrée de fluide, décalée du deuxième angle de décalage.

13. Turbine selon l'une quelconque des revendications 1 à 11, lorsqu'incluant la revendication 10,
dans laquelle le carter (3a, 3b, 3c, 3d, 3e) comprend une partie d'étanchéité de pointe (3e) ayant une position axiale étant au moins approximativement égale à une position axiale (z₂₃) de la pointe (23) de pale de rotor de la pale (9) de rotor.

14. Turbine selon l'une quelconque des revendications précédentes, dans laquelle au moins une des caractéristiques suivantes est vraie :
des sorties de la pluralité de conduites de refroidissement sont angulairement espacées de façon non égale ;
des sorties de la pluralité de conduites de refroidissement sont différemment dimensionnées et/ou formées ;
différentes conduites de refroidissement parmi la pluralité de conduites de refroidissement sont adaptées à fournir différentes quantités de fluide de refroidissement.

15. Procédé de conversion d'énergie, le procédé comprenant :
la fourniture d'un fluide en écoulement par l'intermédiaire d'au moins une conduite d'entrée de fluide (13) étant fixée à un carter (3a, 3b, 3c, 3d) ;
l'écoulement du fluide en écoulement jusqu'à au moins une aube directrice (17) ayant un bord aval (21), l'aube directrice étant fixée au carter ;
l'entraînement, par le fluide en écoulement, d'un arbre de rotor supporté de façon rotative à l'intérieur du carter ; et
la fourniture d'un fluide de refroidissement à travers une sortie (29) d'au moins une conduite de refroidissement (25) dans le carter,
dans lequel, par rapport à un axe de rotation de l'arbre de rotor,
une position angulaire (ϕ₃₃) d'un centre (33) de la sortie (29) de la conduite de refroidissement (25) est espacée d'une position angulaire (ϕ₂₁) d'une partie du bord aval (21) de l'aube directrice (17), décalé d'un premier angle de décalage, d'une première distance angulaire, et
la position angulaire (ϕ₃₃) du centre (33) de la sortie (29) de la conduite de refroidissement (25) est espacée d'une position angulaire (ϕ₁₄) d'un centre (14) de la conduite d'entrée de fluide (13), décalé d'un deuxième angle de décalage, d'une deuxième distance angulaire,
dans laquelle la première distance angulaire est inférieure à 10°, en particulier inférieure à 5°, et la deuxième distance angulaire est inférieure à 30°, en particulier inférieure à 15°,
dans laquelle le centre (33) de la sortie (29) de l'au moins une conduite de refroidissement (25) est agencé en aval de l'au moins une aube directrice (17),
dans laquelle une pluralité de conduites de refroidissement comprenant l'au moins une conduite de refroidissement est agencée de telle manière que, lorsque la température et la pression de fluide en écoulement sont toutes les deux élevées,
un refroidissement maximum est fourni.

16. Procédé selon la revendication 15,
comprenant en outre :
le guidage du fluide de refroidissement à travers la conduite de refroidissement (25) jusqu'à une pointe (23) d'une pale (9) de rotor fixée à l'arbre de rotor et à une partie d'étanchéité de pointe (3e) du carter.
